# EUROPÄISCHE PATENTSCHRIFT

(11) **EP 0 916 485 B1**
(45) Veröffentlichungstag und Bekanntmachung des Hinweises auf die Patenterteilung: **01.08.2001**
(21) Anmeldenummer: 99101552.0
(22) Anmeldetag: 23.07.1994
(51) Int. Cl.: B41F 13/004

(54) **Anordnung eines Winkellagegebers und dessen Verwendung in einem Positionierverfahren**
Device for mounting an angular indicator and its application in a method for positioning
Dispositif de montage d'un indicateur d'angle et son application dans un procédé de positionnement

(43) Veröffentlichungstag der Anmeldung: 19.05.1999
(62) Teilanmeldung aus: 94111516.4
(73) Patentinhaber: BAUMÜLLER NÜRNBERG GMBH, D-90482 Nürnberg (DE)
(72) Erfinder: Götz, Fritz Rainer, 90522 Oberasbach (DE); Marz, Heinrich-c./o.LDA Link Data Automation GmbH, 89365 Röfingen (DE); Meis, Harald, 90559 Burgthann (DE); Agne, Werner, 90552 Röthenbach (DE)
(74) Vertreter: Götz, Georg, Dipl.-Ing.

(56) Entgegenhaltungen:
- DE-U- 9 306 369

## Beschreibung

Die Erfindung betrifft die Anordnung eines mit einem geregelten Antriebssystem verbundenen Winkellagegebers, der einen dreh- oder schwenkbaren Fühlerrotor und ein diesem zugeordnetes, stationäres Abtastorgan aufweist, um die Winkellage eines an einer Wandung drehgelagerten und bezüglich seiner Drehachse längs-, schräg, quer- und/oder diagonal verstellbaren Funktionsteiles eines Gerätes oder einer Maschine zu bestimmen.

Elektrische Antriebssysteme, Antriebsanordnungen bzw. -verfahren zur Verstellung von einem oder mehreren dreh- und/oder verschwenkbaren Funktionsteilen von Geräten und Maschinen, insbesondere von Druckmaschinen, wozu mindestens ein Elektromotor verwendet wird, dessen Rotor zur steifen und direkten Verbindung mit dem Funktionsteil ausgebildet ist, sind aus der DE-OS 41 38 479 und der älteren EP-A-0 621 133 bekannt.

Nach dem sonstigen Stand der Technik sind die einzelnen Funktionseinheiten von Druckmaschinen, beispielsweise Abrollung/Rollenwechsler, Druckwerke, Druckzylinder, Trockner mit Kühlwalzen, Falzer, Querschneider, Ablage usw. durch mechanische Wellen und/oder Zahnräder miteinander verkoppelt, um deren gegenseitige Winkellageorientierung herbeizuführen. Will man diese Funktionsteile bzw. -komponenten vereinzeln und auf die mechanische Verkopplung verzichten, so sind die einzelnen Funktionsteile mit eigenen Antriebssystemen auszurüsten, die nach der genannten DE-OS 41 38 479 als Direktantriebe ausgeführt sind. Zur Erzielung der notwendigen Winkellageorientierung der einzelnen Druckmaschinen-Komponenten untereinander ist eine entsprechende Synchronisation der Antriebssysteme erforderlich.

Zur Lösung der aufgezeigten Problematik werden bei einem elektrischen Antriebssystem mit den eingangs genannten Merkmalen erfindungsgemäß ein oder mehrere Winkellagegeber, die Winkelbewegungen des Elektromotor-Rotors und/oder Funktionsteiles der Maschine oder des Gerätes aufnehmen, ein Signalverarbeitungsmodul, das eingangsseitig zur Aufnahme der Winkellagesignale als Istwerte mit dem oder den Winkelgebern verbunden sowie zur Aufnahme von Sollwerten und zu deren Vergleich mit den Istwerten ausgebildet ist, und ein vom Signalverarbeitungsmodul kontrollierter Leistungsverstärker angeordnet, der ausgangsseitig mit dem Elektromotor zu dessen Ansteuerung verbunden ist.

Dabei bildet das Signalverarbeitungsmodul einen konfigurierbaren und parametrierbaren Antriebsregler, mit dem auch komplexe Regel-Algorithmen und/oder mehrere Regelkreise realisiert werden können. Mit der Erfindung ist ein Konzept für eine Vielfachsteuerung einer Mehrzahl von Drehachsen geschaffen, wobei sich das zugehörige Steuerungs- und Regelungssystem modular projektieren läßt. Beim besonderen Anwendungsfall in Druck-, insbesondere Offsetmaschinen, ist das erfindungsgemäße Antriebssystem besonders geeignet, weil damit eine hohe Qualität bzw. Genauigkeit der Winkellageorientierung, wie z. B. zwischen den Druckeinheiten, wo die Rasterpunkte verschiedener Farben in einem engen Toleranzbereich gedruckt werden müssen, erreichbar ist.

Nach einer baulichen Konkretisierung des erfindungsgemäßen Antriebssystems ist der Rotor des Elektromotors mit dem Funktionsteil, z. B. Druckzylinder, baulich integriert und/oder einstückig ausgeführt. Einerseits kann dies durch Anbau des Rotors an einem Wellenstummel des drehbaren Funktionsteiles erfolgen. Zum anderen kann es vorteilhaft sein, den im erfindungsgemäßen Antriebssystem eingesetzten Elektromotor mit einem walzen- oder zylinderförmigen Außenläufer oder -rotor auszubilden. Damit ist erreicht, daß die Form des Rotors etwa der zweckmäßig rotationssymmetrischen Form des Funktionsteiles entspricht, und insbesondere darin baulich aufgenommen sein kann.

Analog dem genannten Direktantrieb des Funktionsteiles liegt im Rahmen der Erfindung eine Direktmessung von dessen Winkellage, -geschwindigkeit, -beschleunigung usw. So ist nach einer vorteilhaften Ausbildung der Erfindung der Winkellagegeber direkt am Funktionsteil zur unmittelbaren Messung von dessen Winkel- bzw. Dreh/Schwenkbewegungen angebracht. Vor allem im Zusammenhang mit hochauflösenden, schnellen Winkellagegebern, wie an sich bekannt, kann so eine unmittelbare und mithin äußerst wirklichkeitsgetreue Beobachtung der Regelstrecke, nämlich des zu drehenden oder schwenkenden Funktionsteiles, durchgeführt werden.

Nach einer alternativen Ausbildung ist dem Elektromotor ein einziger Winkellagegeber zugeordnet, der die Winkelbewegungen des Rotors des Elektromotors aufnimmt; gleichzeitig ist ein in der Regelungstechnik an sich bekanntes Beobachtermodul für Zustandsgrößen des Funktionsteiles eingerichtet, das vorzugsweise in Differenzsignalaufschaltung (in der Regelungstechnik an sich bekannt) mit dem Winkellagegeber und/oder dem Signalverarbeitungsmodul gekoppelt ist. Die Differenzsignalaufschaltung läßt sich auf der Basis der Erfindung auch im Zusammenhang mit wenigstens zwei Winkellagegebern einsetzen, die je am Rotor des Elektromotors und am Funktionsteil zur unmittelbaren Aufnahme von deren Winkelbewegungen angebracht sind.

Für die Zwecke der Erfindung kommen höchstauflösende, schnelle Winkellagegeber, beispielsweise in der Ausführung als Sinus/Kosinus-Absolutgeber, als Inkrementalgeber mit Rechtecksignalen und Nullimpulssignal und als Inkrementalgeber mit Sinus/Kosinus-Signal nebst Nullimpulssignal in Frage. Um im Betrieb axiale Verstellungen des Funktionsteiles, bei Druckmaschinen beispielsweise die sogenannte Seitenregisterverstellung, zuzulassen, sind als Winkellagegeber im Sinne der Erfindung vor allem Hohlwellengeber mit eine (Zahn-) Teilung aufweisendem Geberrad und einem Geberkopf geeignet. Diese sind über einen Luftspalt voneinander radial beabstandet, und axiale Versetzungen gegeneinander innerhalb eines bestimmten Rahmens beeinträchtigen die Abtastfunktion des Geberkopfes gegenüber dem Geberrad nicht. Der mit dem Einsatz des Hohlwellengebers erzielte Vorteil besteht vor allem darin, daß das Geberrad mit dem (abzutastenden) Funktionsteil baulich integriert und/oder einstückig ausgeführt sein kann, so daß aufgrund dieser Direktverbindung eine unmittelbare Beobachtung bzw. Erfassung von dessen Winkelbewegungen gewährleistet ist.

Mit Vorteil werden beim erfindungsgemäßen Antriebssystem reaktionsschnelle Leistungsverstärker mit digitalen Phasenstromreglern verwendet. Der Umrichter kann dabei mit Spannungszwischenkreis oder mit Direkteinspeisung und damit hoher Zwischenkreisspannung ausgeführt sein (wie an sich bekannt). Mit letzterer wird eine große zeitliche Stromänderung ermöglich. Die digitale Phasenstromregelung ist für das erfindungsgemäße Antriebssystem zweckmäßig mit Pulsbreitenmodulation hoher Taktfrequenz, schnellen Transistorschaltern und Spannungsvorsteuerung ausgeführt, wobei die Phasenstromsollwerte und/oder die Vorsteuerwerte über störsichere Lichtwellenleiter-Verbindungen vorgegeben werden. Ferner ist eine Rückmeldung der Phasenstromistwerte und/oder -spannungen zur Motorführung sowie eine Vorgabe von Werten zur Konfigurierung und Parametrierung nebst Rückmeldung von Statusinformationen zur Diagnose vorteilhaft.

Damit für die Kontrolle der Schwenk- oder Drehbewegungen des Funktionsteiles eine hohe Dynamik gewährleistet ist, empfiehlt sich für das erfindungsgemäße Antriebssystem der Einsatz schneller Signalverarbeitung. Diese ist zweckmäßig strukturiert in einen digitalen Signalprozessor und einen damit gekoppelten, separat ausgeführten Achsperipheriemodul. Der Signalprozessor ist als konfigurierbarer und parametrierbarer Antriebsregler mit realisierbaren Abtastzeiten um 100µsec. (auch bei komplexen Regel-Algorithmen und mehreren Regelkreisen) sowie bei Rechenlaufzeiten im Bereich von 50µsec. erhältlich. Die Funktionen des Signalprozessors können die Geberauswertung, die Motorführung, Drehzahlregelung, Winkellageregelung, Feininterpolation der Vorgabewerte und anderes umfassen. Das Achsperipheriemodul ist zweckmäßig mit einer über Lichtwellenleiter laufenden Schnittstelle zu den digitalen Phasenstromreglern und ferner mit einer Schnittstelle zu den Winkellagegebern vorzugsweise in der Ausführung als Sinus/Kosinus-Absolutgeber, als Inkrementalgeber mit Rechtecksignalen und Nullimpulssignal und als Inkrementalgeber mit Sinus/Kosinus-Signal mit Nullimpulssignalen versehen.

Durch diese Struktur für das erfindungsgemäß eingesetzte Signalverarbeitungsmodul läßt sich durch simultane Vorgabe der Sollwerte entsprechend dem Prinzip der Lagesteuerung ein winkellageorientierter Betrieb für die relevanten Drehmassen bzw. einzelne Funktionsteile eines Gerätes oder einer Maschine, insbesondere Druckmaschine, realisieren. Dabei können im Signalverarbeitungsmodul die Sollwerte unter Beachtung der Begrenzungen im Ruck, in der Beschleunigung, in der Geschwindigkeit generiert werden. Es läßt sich insbesondere eine Aufschaltung bzw. Vorsteuerung der Winkellage-Geschwindigkeit, -beschleunigung und des -rucks herbeiführen.

Reiben mehrere Funktionsteile bei ihrer Drehung aufeinander, stellen sie über Reibschlupf verkoppelte Drehmassen dar. Bei Druckmaschinen-Zylinder bezeichnet man aufeinanderreibende, blanke Mantelabschnitte, die wegen Druck aufeinanderliegen, als sogenannte Schmitz-Ringe. Dem Problem der über Reibschlupf verkoppelten Drehmassen wird durch eine besondere Ausbildung der Erfindung begegnet, nach der das Signalverarbeitungsmodul mehrere, je einem Funktionsteil zugeordnete Regler oder Reihen mit mehreren Regelgliedern aufweist, die miteinander über zusätzliche, gewichtete Rückführungen verkoppelt sind. Zweckmäßig ist eine Kreuzverkopplung realisiert.

Beim Anwendungsfall "Druckmaschinen" tritt bei den rotierenden Druckzylindern als Störgröße der an sich bekannte "Kanalschlag" auf, der auf eine Längsrille im Zylinder zum Aufziehen eines Gummituchs oder einer Druckplatte beruht. Die an der Manteloberfläche zu Tage tretende Rille führt zu einer sich ändernden Normalkraft und damit zu einem sich ändernden Drehmoment. Diesem Phänomen des "Kanalschlags" läßt sich im Rahmen des erfindungsgemäßen Antriebssystems zweckmäßig durch Bewertung der Istwerte mit Kennliniengliedern und Störgrößenaufschaltung begegnen.

Aus der eingangs erläuterten Problematik wird ferner das der Erfindung zugrundeliegende Problem aufgeworfen, eine Beobachterstruktur und -methodik zu schaffen, mit der eine möglichst verlustlose und naturgetreue Messung bzw. Wiedergabe des Dreh- und/oder Schwenkverhaltens von Funktionsteilen möglich ist. Insbesondere soll eine maximale Kraftschlüssigkeit zwischen einem sich mitdrehenden Winkellagegeber und der davon beobachteten Drehmasse herrschen. Zur Lösung wird bei einer Anordnung eines Winkellagegebers mit den gattungsgemäßen Merkmalen vorgeschlagen, daß vom Winkellagegeber dessen Fühlerrotor mit dem Funktionsteil unmittelbar steif und starr verbunden, und das Abtastorgan an der Wandung abgestützt sind, wobei eine auf das Abtastorgan einwirkende Nachführeinrichtung dergestalt ausgebildet und angeordnet ist, daß es die Verstellbewegungen des Funktionsteiles mit dem Fühlerrotor entsprechend nachvollzieht. Damit können vorteilhaft Funktionsteil-Verstellbewegungen größeren Umfangs, für die sich der Luftspalt zwischen dem Abtastorgan und dem Fühlerrotor nicht ausreichend bemessen läßt, ausgeglichen werden. Nach der Erfindung wirkt nämlich die Nachführeinrichtung so auf das Abtastorgan des Winkellagegebers ein, daß das Abtastorgan die Funktionsteil (Drehmasse)/Fühlerrotor-Verstellbewegungen, jedenfalls solange diese die Abmessungen des Luftspaltes zwischen Abtastorgan und Fühlerrotor überschreiten, nachvollzieht. Die Nachführeinrichtung kann mehrere Funktionskomponenten umfassen: eine in Achsrichtung des Fühlerrotors gegebenenfalls einschließlich des Motors/Funktionsteils gerichtete Linearführung, um beim Anwendungsfall "Druckmaschinen" das Abtastorgan an Seitenregister-Verstellungen des Zylinders als Funktionsteil anzupassen; eine bezüglich der genannten Achse radial auslenkende Exzenterführung, um beim Anwendungsfall "Druckmaschinen" das Abtastorgan auf Anstellbewegungen oder Diagonalregister-Verstellungen des Druckzylinders einzustellen, die - wie an sich bekannt - mittels exzentrischer Auslenkung der Zylinder/Motor-Drehachse herbeigeführt werden. Dabei erscheint es notwendig, daß die Funktionsteil-/Fühlerrotor- und andererseits die Abtastorgan-Exzenterführungen einander entsprechend, insbesondere zueinander kongruent, ausgebildet sind, um die Nachführung vor allem in Form sich deckender, exzentrischer Umlaufbahnen von Abtastorgan und Funktionsteil/Fühlerrotor zu gewährleisten. Die Genauigkeit der Nachführung läßt sich noch dadurch fördern, daß beide Exzenterführungen durch eine gemeinsame, lösbare, vorzugsweise mechanische Verbindungseinrichtung miteinander gekoppelt und/oder synchronisiert sind.

Um eine stationäre, steife Abstützung des Abtastorgans an dem Maschinenfundament, insbesondere Wandung einer Druckmaschine, zu erreichen, ist in weiterer Ausbildung der Erfindung eine Feststelleinrichtung vorgesehen, die mit der Nachführeinrichtung derart verbunden, insbesondere synchronisiert ist, daß sie nach Beendigung der aktiven Nachführung des Abtastorgans dieses relativ zur Wandung fixiert.

Zur axialen Linearverschiebung oder exzentrischen Auslenkung des Stators entsprechend den Funktionsteil/Fühlerrotor-Verstellbewegungen ist es zweckmäßig, eine oder mehrere, gesonderte Bewegungseinrichtungen vorzusehen: zum Beispiel einen an einer Exzenterbuchse, an die das Abtastorgan fixiert ist, angreifenden Drehantrieb oder einen Linearantrieb, der am axial verschiebbar gelagerten Abtastorgan angreift, um jeweils das Abtastorgan zur Beibehaltung eines ausreichenden Luftspalts gegenüber dem Fühlerrotor nachzuführen. Diese Nachführbewegungen lassen sich in ihrer Genauigkeit noch weiter verbessern, indem die genannten Dreh- oder Linearantriebe, die jeweils dem Abtastorgan einerseits und dem Drehmassen-/Fühlerrotor-Verbund andererseits zugeordnet sind, bei Registerverstellung oder Anstellbewegung (Einsatzfall: Druckmaschinen) miteinander gekoppelt und/oder synchronisiert sind.

Im Hinblick auf die eingangs erwartete Problematik wird bei Druckmaschinen das der Erfindung zugrundeliegende Problem aufgeworfen, deren dreh- oder schwenkbare Funktionsteile zuverlässig beobachten und entsprechende Zustandsgrößen einem geregelten Antriebssystem zuführen zu können. Dabei sollen Verfälschungen des Meßergebnisses möglichst ausgeschlossen bzw. eine möglichst verlustlose Kopplung mit maximaler Kraftschlüssigkeit in Kraft- bzw. Drehmomentübertragungsrichtung zwischen den anzutreibenden Zylindern und dem Meßwertgeber ermöglicht sein. Zur Lösung wird bei einer gattungsgemäßen Druckmaschine erfindungsgemäß vorgeschlagen, daß die Zylinder zur unmittelbaren Messung ihrer Winkelgrößen mit je einem Winkellagegeber direkt verbunden sind, der ausgangsseitig an das Antriebssystem angeschlossen ist. Der Winkellagegeber bildet damit einen Direkt-Beobachter für das Funktionsteil im Rahmen einer Antriebs-Steuerungskette oder eines Antriebs-Regelkreises, der insbesondere die Umfangsregisterverstellung herbeiführt. Mit dieser Direktbeobachtung kann für jedes Funktionsteil, nämlich Zylinder- bzw. Druckwerkswalze, ein spielfreier, trägheitsarmer und mechanisch steifer Meßstrang bzw. Meßkette aufgebaut werden. Dies ergibt eine hohe Regelgenauigkeit und -dynamik, so daß sich exakte Bahnführung, konstante Bahnspannung und gleichbleibende Farbgebung über die so ermöglichte, hochpräzise Registersteuerung und Druckanstellung erreichen lassen. Die relevanten Drehmassen (beispielsweise Platten- und Gummituch-Zylinder in einem Druckwerk) werden erfindungsgemäß direkt, ohne dazwischen angeordnete Feder-, Dämpfungs-, Reibungsglieder usw., erfaßt, so daß unter Ausschluß von Elastizitäten, Nachgiebigkeiten und Spielen das Bewegungsverhalten des in der Druckmaschine zu beobachtendem Funktionsteiles originalgetreu im Regelungssystem weitergegeben werden kann. Dabei ist es zweckmäßig, auch das Abtastorgan des Winkellagegebers an einer stationären Wandung, beispielsweise der Druckmaschinenwand, elastizitäts- und spielfrei zu fixieren.

In Weiterführung dieses Gedankens ergibt sich die Notwendigkeit, daß der an einem Druckzylinder beispielsweise steif und dicht angesetzte Fühlerrotor zur Realisierung von Druck-An- und Druck-Ab-Bewegungen sowie Diagonalregister-Verstellungen exzentrisch auslenkbar sind. Dem wird mit einer vorteilhaften Ausbildung der Erfindung Rechnung getragen, wonach beim Winkellagegeber Fühlerrotor und Abtastorgan zueinander mit einem solchen Abstand angeordnet und/oder derart verstellbar ausgebildet sind, daß der von diesem begrenzte Luftspalt sich ausreichend verändern und dabei entsprechende, exzentrische Auslenkungen auffangen kann.

So können Stellbewegungen des steifen Drehmasse(Funktionsteil)/Fühlrotor-Verbunds ausgeglichen werden, obgleich das Abtastorgan an der stationären Wandung ortsfest fixiert ist. Ein zwischen dem Abtastorgan und dem Fühlrotor in der Regel vorhandener Luftspalt wird hierzu ausgenutzt. Diese Erfindungsausbildung läßt sich praktisch durch einen Hohlwellengeber realisieren, bei dem der das Geberrad bildende Fühlrotor dem Abtastorgan gegenüberliegend angeordnet ist, ohne mit letzterem über Lager oder dergleichen mechanisch verbunden zu sein.

Weitere Merkmale, Einzelheiten und Vorteile auf der Basis der Erfindung ergeben sich aus den Unteransprüchen und der nachfolgenden Beschreibung bevorzugter Ausführungsbeispiele der Erfindung. Diese zeigen in:
- Fig. 1: das Schema eines erfindungsgemäßen Direkt-Antriebsystems teilweise in Längsansicht,
- Fig. 2: im teilweisen Längsschnitt einen mit einem zu drehenden Zylinder gekoppelten Direktantrieb,
- Fig. 3: ein Blockschaltbild eines Signalverarbeitungsmoduls des erfindungsgemäßen Direktantriebs,
- Fig. 4: ein Blockschaltbild eines erfindungsgemäßen, modularen Antriebssystems zur Steuerung und Regelung einer Mehrzahl von Funktionsteile-Achsen,
- Fig. 5: das dynamische Verhalten eines Ausführungsbeispiels der Erfindung anhand eines Strukturblockschemas,
- Fig. 6: im axialen bzw. Längsschnitt die Anbringung eines Hohlwellengebers am Direktantrieb bzw. der Wandung eines Druckwerkszylinder,
- Fig.7: eine Richtungspfeil VII in Fig. 6 entsprechende Stirnansicht und
- Fig. 8: eine Richtungspfeil VIII in Figur 7 entsprechende Stirnansicht.

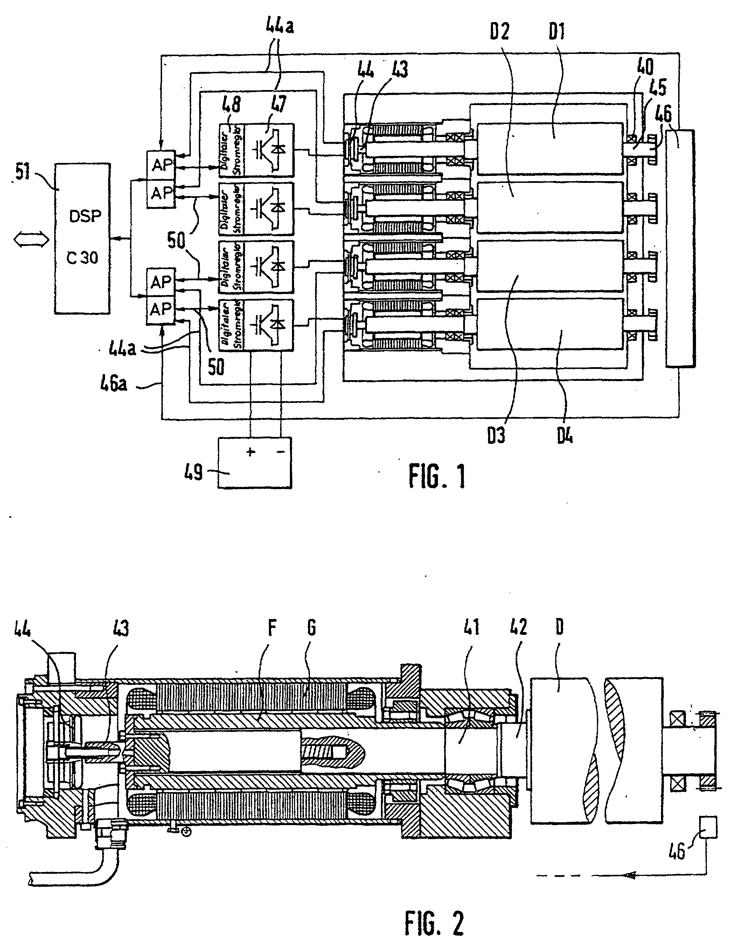

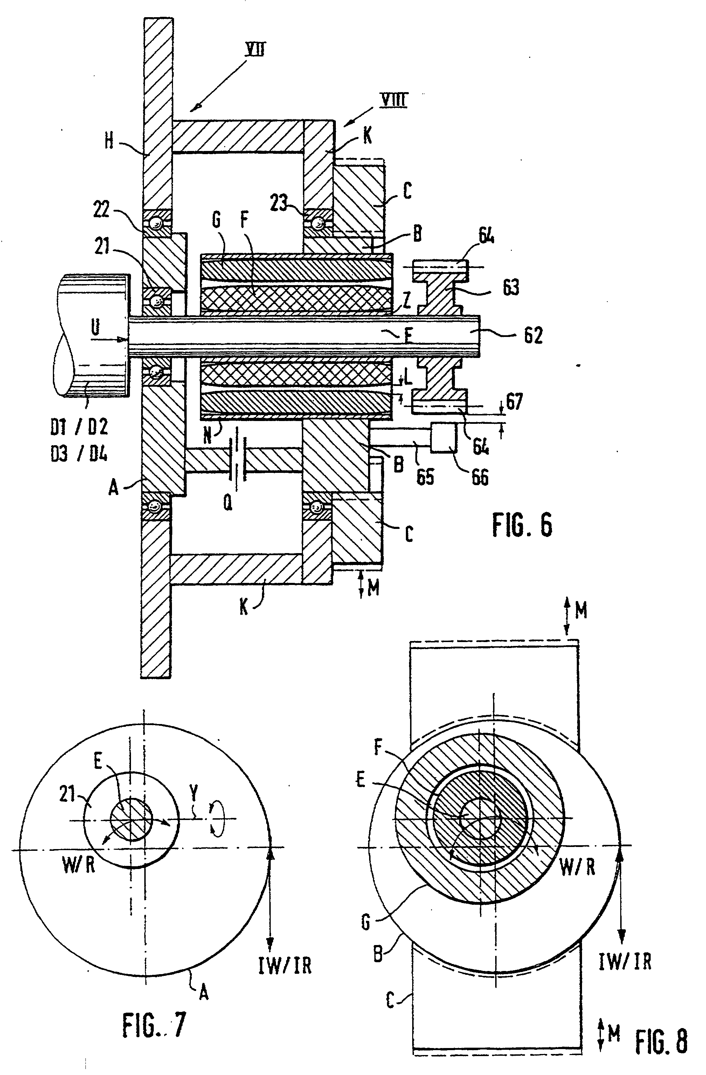

Gemäß Figur 1 besteht das Druckwerk einer Rollenoffset-Maschine aus den vier Platten- bzw. Gummituchzylindern D1, D2, D3 und D4 (schematisch dargestellt), die über Lager 40 an der ortsfesten Wandung H (vgl. Figur 6) der Maschine drehbar sind. Zu ihrer Drehung ist ihnen jeweils ein Elektromotor mit einem Rotorpaket F und einem Statorpaket G zugeordnet. Der Achsstummel 41 des Rotors F ist unmittelbar mit dem Achsstummel 42 des Zylinders D verbunden; mit anderen Worten, beide sind miteinander so baulich integriert, daß sie ineinander übergehen und dabei eine Antriebsverbindung bilden, die etwa so drehsteif wie eine einstückige Stahlwelle ist. Die an den freien Stirnseiten der Elektromotoren F,G herausragenden Achsstummel 43 sind mit Sinus/Kosinus-Absolut-Winkellagegebern 44, versehen. Am entgegengesetzten Ende stehen Achsstummel 45 von den Zylindern Dl - D4 vor, die ebenfalls je mit einem gleichartigen Absolut-Winkellagegeber 46 versehen sind. Die Elektromotoren F,G sind konstruktiv als Einbaumotoren ausgeführt. Sie können mit Drehstrom-Servomotoren in synchroner Bauart mit Permanentmagneten ausgeführt sein. Diese werden von einem Leistungsblock 47 jeweils mit digitalem Stromregler 48 angesteuert. Der Leistungsblock 47 wird von einer Zwischenkreis-Versorgung 49 aus mit elektrischer Energie versorgt. Die digitalen Stromregler 48 kommunizieren jeweils über störsichere Lichtwellenleiter 50 mit einem Achs-Peripheriemodul AP. Die Achs-Peripheriemodule weisen ferner jeweilige Schnittstellen 44a, 46a einerseits für je einen der an den Elektromotoren F,G angebrachten Winkellagegeber 44 als auch für je einen der auf den entgegengesetzten Wellenenden bzw.

Achsstummeln 45 an den freien Stirnseiten der Zylinder D1 - D4 befindlichen Winkellagergeber 46 auf. Die Achs-Peripheriemodule AP werden von einem gemeinsamen, digitalen Signal-Prozessor 51 kontrolliert. Dieser ist als Antriebsregler für eine maximale Anzahl von Achsen mit Lageregler, Drehzahlregler, Motorführung und Geberauswertung konfigurierbar.

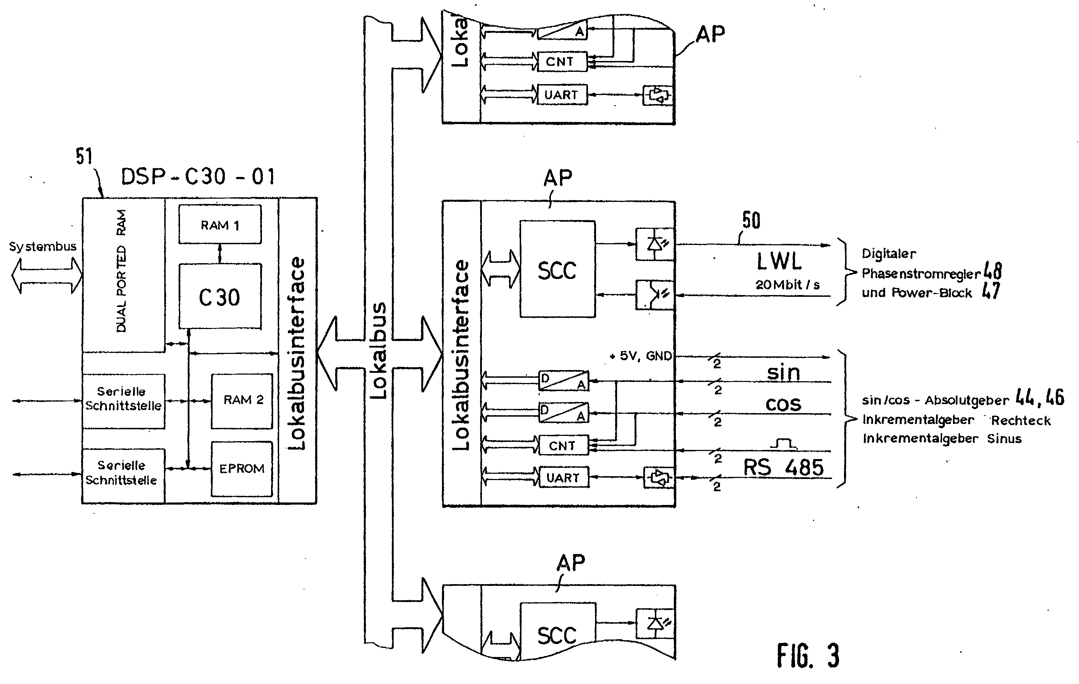

In Figur 3 ist die jeweilige interne Struktur des Signal-Prozessors 51 als auch der Achs-Peripheriemodule AP vergrößert dargestellt und mit dem Fachmann geläufigen Abkürzungen bezeichnet, so daß sich weitere Erläuterungen grundsätzlich erübrigen. Mit SCC ist ein sogenannter serieller Kommunikations-Steuerbaustein bezeichnet.

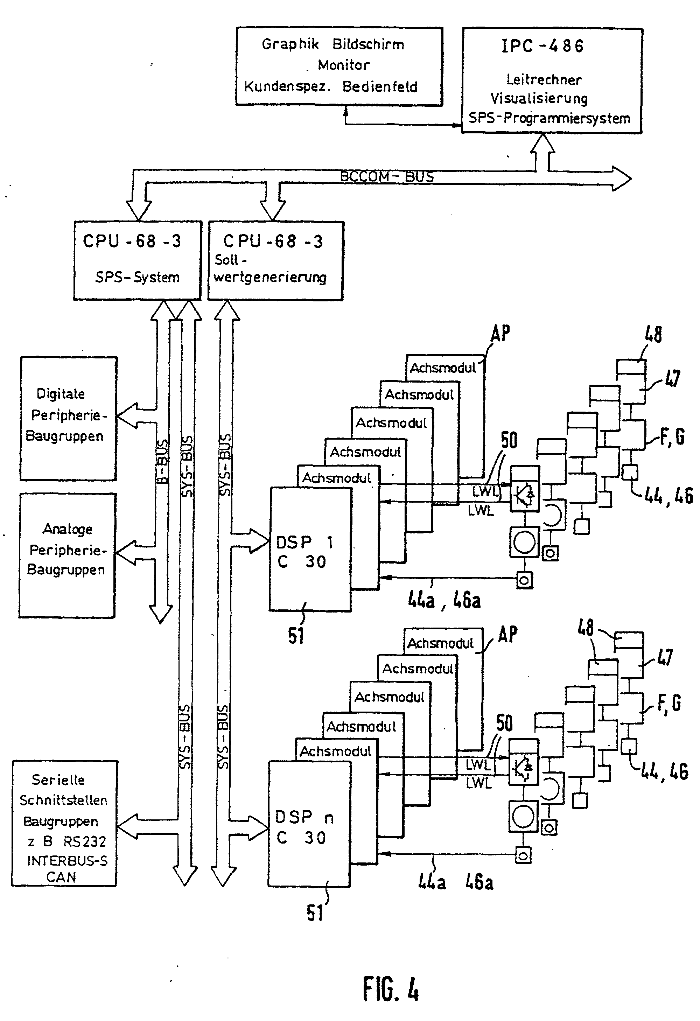

In Figur 4 ist die Einbindung des erfindungsgemäßen Antriebssystems gemäß Figur 1 - 3 in ein globales Konzept für eine Vielfachsteuerung mit projektierbaren, modularen Steuerungs- und Regelungseinheiten veranschaulicht. Neben einem Leitrechner IPC-486 sind Bausteine CPU-68-3 zur speicherprogrammierbaren Steuerung und zur Sollwertgenerierung vorgesehen. An diese sind die Signalprozessoren 51 über einen Systembus angekoppelt.

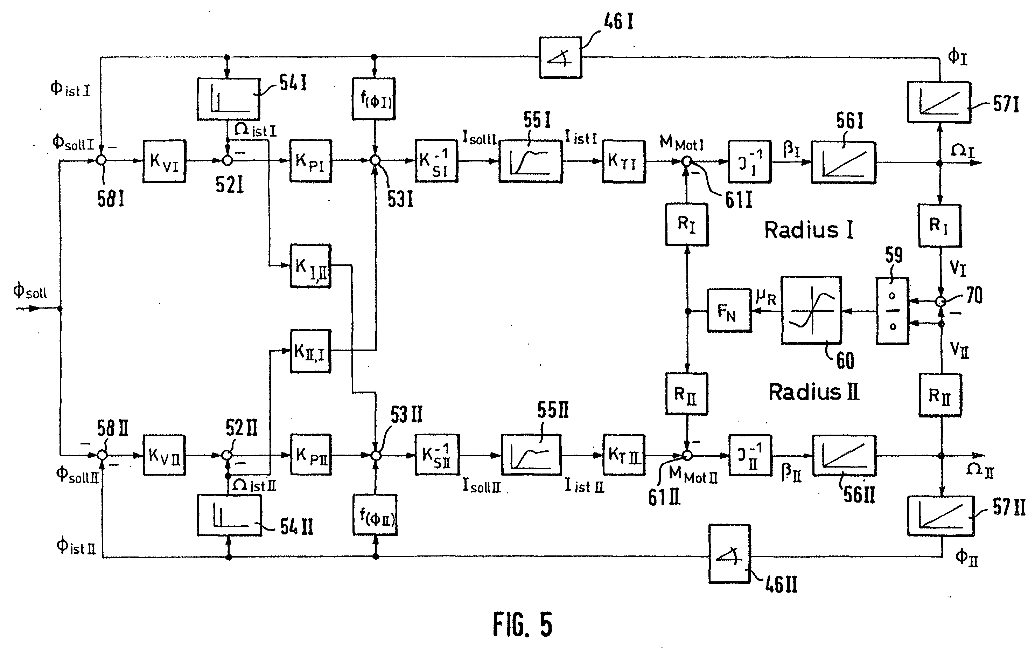

Das Blockschema gemäß Figur 5 stellt ein beispielhaftes, erfindungsgemäßes Antriebssystem für zwei über Reibschlupf (Schmitz-Ringe) verkoppelte, lagegeregelte Achsen I, II dar. Aus einer Sollwert-Generierung (beispielsweise gemäß Figur 4) werden jeder Achse I, II zu ihrer Lagesteuerung Winkellagesollwerte φ _{soll I}, φ_{soll II} vorgegeben. Nach Vergleich mit dem über die Winkellagegeber 46 jeweils erhaltenen Istwerten φ _{ist I}, φ _{ist II} wird die jeweilige Regeldifferenz einem Lageregler K_{VI}, K_{VII} zugeführt. Dessen jeweiliger Ausgangswert wird einer Differenzbildung 52I, 52II mit dem differenzierten Winkellage-Istwert, d.h. der jeweiligen Ist-Winkelgeschwindigkeit Ω_{istI}, Ω_{IstII} der Achsen I, II unterworfen. Der daraus jeweils resultierende Differenzwert wird einem Drehzahlregler K_{pI}, K_{pII} zugführt, dessen jeweiliger Ausgang auf ein Summierglied 53I, 53II trifft. Jedem dieser Summierglieder 53I, 53II ist zur Bildung einer Störgrößenaufschaltung der Ausgang eines Kennliniengliedes f(φ_{I}), f(φ_{II}) als Funktion der Winkellage φI, φII zugeführt. Demgemäß ist jedes Kennlinineglied eingangsseitig mit dem Ausgang des entsprechenden Winkellagergebers 46I, 46II verbunden. Den Summiergliedern 53I, 53II sind ferner die jeweiligen Ausgänge proportionaler Rückführungsglieder K_{I, II}, K_{II,I} zugeführt, welche kreuzweise in die Ist-Winkelgeschwindigkeit Ω _{Ist II} bzw. Ω_{Ist I} am jeweils entsprechenden Differenzierglied 54II, 54I abgreifen. Die Eingänge der Differenzierglieder 54I, 54II sind jeweils mit dem Ausgang der entsprechenden Winkellagegeber 46I bzw. 46II verbunden. Diese Kreuzverkopplung mittels der Proportionalglieder K_{I,II} bzw. K_{II,I} wirkt auf die beispielsweise über die Schmitz-Ringe verkoppelten Regelstrecken/Achsen I bzw. II entkoppelnd.

Die jeweiligen Ausgänge der Summierglieder 53I und 53II münden direkt in jeweilige Proportionalglieder K⁻¹_{SI}, K⁻¹_{SII}, welche u.a. auf die Drehmassen der die Achsen I, II umfassenden Funktionsteile bezogene Faktoren darstellen. Danach folgen Stromregelungskreise 55I, 55II, die die eingangsseitigen Stromsollwerte I_{sollI}, I_{sollII} in Ist-Stromwerte I_{istI}, I_{istII} umwandeln. Die Stromregelkreise 55I, 55II verhalten sich nach außen näherungsweise wie in der Regelungstechnik an sich bekannte PT₂-Glieder. Die jeweiligen Ist-Stromwerte I_{istI}, I_{istII} sind Proportionalgliedern K_{TI}, K_{TII} zugeführt, welche die Elektromotor-Konstante zur Umwandlung von Strom in ein Motor-Drehmoment M_{MotI}, M_{MotII} darstellen. Nach Verknüpfung mit dem jeweiligen Proportionalglied I⁻¹_{I}, I⁻¹_{II} entsprechend der jeweiligen Drehmasse der Achse I, II und unmittelbar nachfolgender Aufintegration der Winkelbeschleunigung β_{I}, β_{II} mittels des Integrations-Gliedes 56I, 56II ergibt sich die Winkelgeschwindigkeit ΩI, ΩII, mit denen die Drehmassen/Funktionsteile um ihre jeweiligen Drehachsen I, II rotieren. Nach Integration mit einem weiteren Integrations-Glied 57I, 57II läßt sich in Verbindung mit den jeweiligen Winkellagegebern 46I, 46II der Winkellage-Istwert φ_{istI}, φ_{istII} ermitteln und den jeweiligen Vergleichen 58I, 58II am Eingang des Blockschaltbildes gemäß Figur 5-zum Soll-Istwert-Vergleich zuführen.

Zu berücksichtigen ist noch, daß im Anwendungsfall bei Platten-/Gummizylindern eines Druckwerks einer Rollenoffset-Maschine (vgl. Figur 1) die jeweiligen Zylinder Dl, D2 bzw. D3, D4 mit Schlupf aufeinander reiben, woraus ein Störmoment resultiert. Dies ist in Figur 5 im Ausgangsbereich des Blockschemas bzw. der Antriebsstruktur durch die paarweise übereinstimmenden und parallel liegenden Proportionalglieder R_{I} (entsprechend dem Halbdurchmesser bzw. Radius der die Achse I umfassenden Drehmasse) einerseits und R_{II} (entsprechend dem Radius bzw. Halbmesser, der die Achse II umfassenden Drehmasse) andererseits zum Ausdruck gebracht. Die jeweiligen Bahngeschwindigkeiten v_{I}, v_{II} der beiden Drehmassen I, II errechnen sich nach je einem ersten bzw. äußeren der beiden Proportionalglieder-Paare R_{I} bzw. R_{II}, die die jeweilgen Winkelgeschwindigkeiten ΩI, ΩII der beiden Drehmassen als Eingangsgröße haben. Die Bahngeschwindigkeiten V_{I}, V_{II} werden im Rahmen einer Differenzbildung 70 voneinander subtrahiert. Der Schlupf s ergibt sich durch den Quotienten aus dieser Differenz und einer der beiden Umfangsbahn-Geschwindigkeiten V_{I}, V_{II} der beiden Drehmassen, wie durch das Dividierglied 59 verdeutlicht. Das diesem nachfolgende Kennlinienglied 60 repräsentiert die spezifische Reibungscharakteristik beim Aufeinanderrollen von Zylinder-Mantelflächen und ergibt als Funktionswert den Reibungskoeffizienten µ_{R}. Wird diese mit der Normalkraft F_{N} entsprechend dem Anpressdruck der Zylinder aufeinander mulitpliziert, ergibt sich die störende Reibungskraft in Zylinder-Tangantial- bzw. Umfangsrichtung. Diese multipliziert mit dem jeweiligem zweiten bzw. inneren Radius-Proportionalglied R_{I} bzw. R_{II} jedes Parallel-Proportionalgliedpaares ergibt den Drehmomenteneinfluß, der jedem vom zugeordneten Antriebsmotor erzeugten Drehmoment M_{MotI} bzw. M_{MotII} aufgrund der Schlupfreibung entgegenstehend wie durch das jeder Achse I bzw. II zugeordnete Vergleichsglied 61I bzw. 61II veranschaulicht.

In den Figuren 6 - 8 ist die Nachführung des Rotors F,Z und/oder des Stators N,G des Elektromotors für die Platten-oder Gummituchzylinder D1 - D4 dargestellt, die u.a. mittels der Exzenterbuchsen A, B realisiert ist. Damit lassen sich für die Zylinder D1 - D4 Verstellbewegungen in Längsrichtung U (Verstellung der Seitenregister), in Querrichtung R (Verstellung der Diagonalregister), Anstellbewegungen W usw. realisieren. Wegen der Einzelheiten der Zylinder-Lageeinstellung wird auf die eingangs genannten Fundstellen DE-OS 41 38 479 und ältere EP-Patentanmeldung 93 106 545.2 verwiesen. Die dort zur Beschreibung der (dortigen) Figuren 7 - 9 verwendeten Bezugszeichen sind in den vorliegenden Figuren 6 - 8 sinngemäß verwendet.

Zusätzlich ist die Zylinderwelle E mit einem sich axial erstreckenden Ansatz 62 versehen, der vom Elektromotor G,F,N,Z koaxial vorspringt und am Stirnende der Antriebswelle starr und steif fixiert und/oder damit einstückig ausgeführt ist. Auf der Umfangsfläche des Ansatzes 62 ist ein Pol- oder Geberrad 63 eines Hohlwellengebers starr bzw. ortsfest fixiert. Dieses weist an seinem äußeren Rand radial vorspringende Zähne 64 auf, die in Umfangsrichtung gemäß einer bestimmten Teilung beabstandet aneinandergereiht sind. An der nach außen gewandten Stirnseite der den Stator G,N umfassenden Exzenterbuchse B ist ein parallel zur Drehachse vorspringender Befestigungsschaft 65 fixiert, der an seinem freien Ende den Geberkopf 66 des Hohlwellengebers trägt. Dieser ist mit einem bezüglich der Geberrad-Drehachse verlaufenden Abstand 67 zu den Zähnen 64 des Geberrads 63 angeordnet. Der Abstand 67 ist so bemessen, daß einerseits die Wirkungsverbindung von dem Geberkopf und der Zähne 64 auf dem Geberrad 63 zustandekommen kann und andererseits in bestimmtem Umfang Axialversetzungen zwischen dem Geberkopf 66 und dem Geberrad 63 möglich sind, ohne daß die Funktionsfähigkeit dieser Wirkungsverbindung beeinträchtigt wird. Außerdem sind das Geberrad 63 und/oder dessen Zähne 64 dazu ausreichend breit ausgeführt. Auch eine mittige Anordnung des Geberkopfs 66 gegenüber den Zähnen ist hierzu vorteilhaft.

Die Erfindung ist nicht auf dieses in Figuren 6 - 8 dargestellte Ausführungsbeispiel beschränkt: So ist es denkbar, daß der Befestigungsschaft 65 direkt an der Wandung H der Druckmaschine fixiert ist, und/oder der vom Geberrad 63 umgebene Ansatz direkt an der Stirnseite eines der Zylinder Dl - D4 angebracht ist, während der Elektromotor F,G beispielsweise an der anderen Stirnseite des Zylinders D1 - D4 angreift, wie in Figur 1 angedeutet.

## Patentansprüche

1. Anordnung eines Winkellagegebers (63, 66) mit einem dreh- oder schwenkbaren Fühlerrotor (63) und einem zugehörigen, stationären Abtastorgan (66), insbesondere Hohlwellengeber mit Geberrad und dieses abtastendem Geberkopf, zur Bestimmung der Winkellage (φist) eines an einer Wandung (H) drehgelagerten (S, T) und bezüglich seiner Drehachse (Y) längs-, schräg, quer-und/oder diagonal (R, U, W) verstellbar geführten Funktionsteiles eines Gerätes oder einer Maschine, beispielsweise eines Zylinders (D1, D2, D3, D4) einer Druckmaschine, das zu seiner Drehung mit einem über den Winkellagegeber (63, 66) geregelten Antriebssystem gekoppelt ist, **dadurch gekennzeichnet, daß** vom Winkellagegeber dessen Fühlerrotor (63) mit dem Funktionsteil (D1, D2, D3, D4) unmittelbar steif und starr verbunden, und das Abtastorgan (66) an der Wandung (H) abgestützt sind, wobei eine auf das Abtastorgan (66) einwirkende Nachführeinrichtung (B, 23) dergestalt ausgebildet und angeordnet ist, daß es die Verstellbewegungen (R, U, W) des Funktionsteiles (D1 - D4) mit dem Fühlerrotor (63) entsprechend nachvollzieht.

2. Anordnung nach Anspruch 1, **dadurch gekennzeichnet, daß** die Wandung (H) einen fest angebrachten, vorzugsweise brückenartigen und/oder L-förmigen Ansatz (K) aufweist, an dem das Abtastorgan (66) angebracht ist.

3. Anordnung nach Anspruch 1 oder 2, **dadurch gekennzeichnet, daß** der Fühlerrotor in der Wandung drehgelagert, und dabei seine Drehachse exzentrisch ausgelenkt geführt ist.

4. Anordnung nach Anspruch 1, 2 oder 3, **dadurch gekennzeichnet, daß** beim Winkellagegeber Fühlerrotor (63) und Abtastorgan (66) zueinander mit einem solchen Abstand (67) angeordnet und/oder derart verstellbar ausgebildet sind, daß der von diesen begrenzte Luftspalt zum Ausgleich der Funktionsteil/Fühlerrotor-Verstellbewegungen (R, U, W) veränderbar ist.

5. Anordnung nach Anspruch 1, 2, 3 oder 4, **dadurch gekennzeichnet, daß** die Nachführeinrichtung (B, 23) für das Abtastorgan eine in oder an der Wandung (H) oder gegebenenfalls deren Ansatz (K) angebrachte axiale Linearführung und/oder radial auslenkende Exzenterführung (B) aufweist, die der Funktionsteil/Fühlerrotor-Exzenterführung (A, 22) entspricht.

6. Anordnung nach Anspruch 5, **dadurch gekennzeichnet, daß** beide Exzenterführungen (A, 22; B, 23) zueinander kongruent angeordnet und/oder zur Herbeiführung sich deckender Umlaufbahnen (W, R) ausgebildet sind.

7. Anordnung nach Anspruch 5 oder 6, **dadurch gekennzeichnet, daß** beide Exzenterführungen (A, 22; B, 23) durch eine lösbare, vorzugsweise mechanische Verbindungseinrichtung (Q) miteinander gekoppelt und/oder synchronisiert sind.

8. Anordnung nach Anspruch 5, 6 oder 7, **gekennzeichnet durch** eine mit der Nachführeinrichtung (B, 23) in Wirkungsverbindung stehende Feststelleinrichtung (C) zum Arretieren und/oder zur steifen Anbindung des Abtastorgans bezüglich der Wandung (H) und/oder deren Ansatzes (K).

9. Anordnung nach Anspruch 5, 6, 7 oder 8, **dadurch gekennzeichnet, daß** wenigstens die Abtastorgan-Exzenterführung (B, 23) als Exzenterbuchse (B) ausgeführt ist, die - von einem entsprechend exzentrischen Kugellager (23) umgeben - in die Wandung (H) eingelassen ist und das Abtastorgan (66) ortsfest trägt.

10. Anordnung nach Anspruch 8 und 9, **dadurch gekennzeichnet, daß** die Abtastorgan-Feststelleinrichtung (C) einen oder mehrere Blockierkörper aufweist, die zum Verstellen (M) und zur formschlüssigen Anlage an freie, vorzugsweise diametral entgegengesetzte Außenseiten der Exzenterbuchse (B) ausgebildet sind.

11. Anordnung nach Anspruch 9 oder 10, **gekennzeichnet durch** einen an einer oder mehreren Exzenterbuchsen (A, B) angreifenden Drehantrieb und/oder einen am gegebenenfalls axial verschiebbar gelagerten Abtastorgan (66) angreifenden Linearantrieb.

12. Anordnung nach Anspruch 11, **gekennzeichnet durch** der Abtastorgan-Exzenterbuchse (B) und der Funktionsteil/Fühlerrotor-Exzenterbuchse (A) zugeordnete Drehantriebe und/oder dem Abtastorgan (66) und dem Funktionsteil/Fühlerrotor-Verbund (D1, D2, D3, D4; 63) zugeordnete Linearantriebe, die miteinander gekoppelt und/oder synchronisiert sind.

13. Verfahren zum Positionieren eines in einem Gerät oder einer Maschine schwenk- und/oder drehbaren Funktionsteils (D1, D2, D3, D4) quer, schräg und/oder diagonal bezüglich seiner Drehachse (Y) mit der Anordnung nach einem der vorangehenden Ansprüche, wenigstens jedoch nach Anspruch 8, **dadurch gekennzeichnet, daß** vor dem Verstellen (R, W) des Funktionsteils (D1, D2, D3, D4) die Arretierung (C) des Abtastorgans bezüglich der Wandung (H) gelöst (M), das Abtastorgan (66) der Verstellbahn (R, W) des steifen Fühlerrotor-Funktionsteil-Verbunds (D1, D2, D3, D4; F) nachgeführt und dann wieder arretiert (M) und/oder steif und starr an der Wandung (H) abgestützt wird.

14. Verfahren nach Anspruch 13, unter Verwendung der Anordnung nach Auspruch 7, **dadurch gekennzeichnet,** daß während des Abtastorgan-Nachführvorgangs die Abtastorgan-Exzenterführung (B) und die Funktionsteil/Fühlerrotor-Exzenterführung (A) miteinander verbunden, gekoppelt und/oder synchronisiert (Q) werden.

15. Verfahren nach Anspruch 14, **dadurch gekennzeichnet, daß** die beiden Exzenterbuchsen (A, B) vor deren Verbinden, Koppeln oder Synchronisieren (Q) zueinander kongruent und/oder zur Herbeiführung sich deckender Umlaufbahnen ausgerichtet werden.

## Claims

1. Arrangement of an angular position transducer (63, 66) with a rotatable or pivotable sensor rotor (63) and an associated, stationary scanning member (66), in particular a hollow shaft transducer with a transducer wheel and a transducer head, which scans the latter, for determining the angular position (φist) of a functional part, which is rotatably mounted (S, T) on a wall (H) and guided so as to be adjustable longitudinally, obliquely, transversely and/or diagonally (R, U, W) relative to its rotational axis (Y), of an apparatus or a machine, for example of a cylinder (D1, D2, D3, D4) of a printing machine, which part is coupled in order to rotate to a drive system which is regulated via the angular position transducer (63, 66), characterised in that the sensor rotor (63) of the angular position transducer is directly connected in a stiff and rigid manner to the functional part (D1, D2, D3, D4), and the scanning member (66) is supported at the wall (H), wherein a tracking device (B, 23), which acts on the scanning member (66), is formed and arranged such that it accordingly reproduces the adjusting movements (R, U, W) of the functional part (D1 - D4) with the sensor rotor (63).

2. Arrangement according to Claim 1, characterised in that the wall (H) comprises a firmly fitted, preferably bridge-like and/or L-shaped attachment (K), on which the scanning member (66) is fitted.

3. Arrangement according to Claim 1 or 2, characterised in that the sensor rotor is rotatably mounted in the wall, and its rotational axis is eccentrically deflected.

4. Arrangement according to Claim 1, 2 or 3, characterised in that the sensor rotor (63) and the scanning member (66) of the angular position transducer are arranged at a spacing (67) and/or formed in an adjustable manner relative to one another such that the air gap which they define can be varied to compensate for the functional part/sensor rotor adjusting movements (R, U, W).

5. Arrangement according to Claim 1, 2, 3 or 4, characterised in that the tracking device (B, 23) for the scanning member comprises an axial linear guide and/or a radially deflecting eccentric guide (B), which is fitted in or on the wall (H) or optionally the attachment (K) thereof and which corresponds to the functional part/sensor rotor-eccentric guide (A, 22).

6. Arrangement according to Claim 5, characterised in that the two eccentric guides (A, 22; B, 23) are arranged congruently with one another and/or to create coincident circulating paths (W, R).

7. Arrangement according to Claim 5 or 6, characterised in that the two eccentric guides (A, 22; B, 23) are coupled together and/or synchronised with one another by a disengageable, preferably mechanical connecting device (Q).

8. Arrangement according to Claim 5, 6 or 7, characterised by a fixing device (C), which is operatively connected to the tracking device (B, 23), for retaining and/or stiffly fastening the scanning member relative to the wall (H) and/or the attachment (K) thereof.

9. Arrangement according to Claim 5, 6, 7 or 8, characterised in that at least the scanning member-eccentric guide (B, 23) is constructed as an eccentric bushing (B) which - surrounded by a correspondingly eccentric ball bearing (23) - is let into the wall (H) and bears the scanning member (66) in a stationary manner.

10. Arrangement according to Claims 8 and 9, characterised in that the scanning member-fixing device (C) comprises one or more locking bodies, which are formed for adjustment (M) and for bearing positively against free, preferably diametrically opposite outer sides of the eccentric bushing (B).

11. Arrangement according to Claim 9 or 10, characterised by a rotary drive acting on one or more eccentric bushings (A, B) and/or a linear drive acting on the scanning member (66), which is optionally mounted so as to be axially displaceable.

12. Arrangement according to Claim 11, characterised by rotary drives associated with the scanning member-eccentric bushing (B) and the functional part/sensor rotor-eccentric bushing (A), and/or linear drives associated with the scanning member (66) and the composite functional part/sensor rotor construction (D1, D2, D3, D4; 63), which drives are coupled together and/or synchronised with one another.

13. Method for positioning a functional part (D1, D2, D3, D4), which is pivotable and/or rotatable in an apparatus or a machine, transversely, obliquely and/or diagonally relative to its rotational axis (Y) with the arrangement according to any one of the preceding Claims, although at least according to Claim 8, characterised in that, prior to the adjustment (R, W) of the functional part (D1, D2, D3, D4), the retention (C) of the scanning member relative to the wall (H) is released (M), the scanning member (66) tracks the adjusting path (R, W) of the stiff composite sensor rotor-functional part construction (D1, D2, D3, D4; F) and is then retained again (M) and/or stiffly and rigidly supported at the wall (H).

14. Method according to Claim 13, using the arrangement according to Claim 7, characterised in that the scanning member-eccentric guide (B) and the functional part/sensor rotor-eccentric guide (A) are connected together, coupled together and/or synchronised with one another (Q) during the scanning member-tracking action.

15. Method according to Claim 14, characterised in that the two eccentric bushings (A, B) are oriented so as to be congruent with one another and/or create coincident circulating paths before being connected, coupled or synchronised (Q).

## Revendications

1. Dispositif de montage d'un générateur de position angulaire (63, 66) comportant un rotor de détection rotatif ou pivotant (63) et un organe fixe associé d'exploration (66), notamment un générateur à arbre creux comportant une roue et une tête explorant cette roue pour déterminer la position angulaire (φist) d'une partie fonctionnelle, qui est montée (S, T) de manière à pouvoir tourner sur une paroi (H) et dont l'axe de rotation (Y) est réglable longitudinalement, obliquement, transversalement et/ou en diagonale, (R, U, W), d'un appareil ou d'une machine, par exemple d'un cylindre (D1, D2, D3, D4) d'une machine d'impression, qui est accouplé, pour sa rotation, à un système d'entraînement réglé au moyen du générateur de position angulaire (63, 66), caractérisé en ce que le rotor de détection (63) du générateur de position angulaire est relié directement d'une manière rigide à la partie fonctionnelle (D1, D2, D3, D4) et que l'organe d'exploration (66) est supporté par la paroi (H), auquel cas un dispositif d'asservissement (B, 23), qui agit sur l'organe d'exploration (66) est agencé et disposé de telle sorte qu'il exécute de façon correspondante des déplacements de réglage (R, U, W) de la partie fonctionnelle (D1-D4) avec le rotor de détection (63).

2. Dispositif selon la revendication 1, caractérisé en ce que la paroi (H) possède un appendice saillant (K) monté fixe, de préférence en forme d'étrier et/ou en forme de L, sur lequel est monté l'organe d'exploration (66).

3. Dispositif selon la revendication 1 ou 2, caractérisé en ce que le rotor de détection est monté de manière à pouvoir tourner dans la paroi et que son axe de rotation est guidé en étant dévié de façon excentrique.

4. Dispositif selon la revendication 1, 2 ou 3, caractérisé en ce que dans le générateur de position angulaire, le rotor de détection (63) et l'organe d'exploration (66) sont disposés à une distance réciproque (67) telle et/ou sont agencés de manière à être réglables de telle sorte que la fente d'air délimitée par ces éléments est modifiable de manière à compenser les déplacements de réglage (R, U, W) de la partie fonctionnelle et du rotor de détection.

5. Dispositif selon la revendication 1, 2, 3 ou 4, caractérisé en ce que le dispositif d'asservissement (B, 23) pour l'organe d'exploration porte un guide linéaire axial monté dans ou sur la paroi (H) ou éventuellement sur son appendice saillant (K) et/ou un guide d'excentrique (B) réalisant une déviation radiale, qui correspondent au guide d'excentrique de la partie fonctionnelle et du rotor de détection (A, 22).

6. Dispositif selon la revendication 5, caractérisé en ce que les deux guides d'excentrique (A, 22, B, 23) sont disposés de manière à être congruents entre eux et/ou sont agencés pour réaliser le guidage de pistes circonférentielles (W, T), qui se recouvrent.

7. Dispositif selon la revendication 5 ou 6, caractérisé en ce que les deux guides d'excentrique (A, 22, B, 23) sont accouplés et/ou synchronisés entre eux au moyen d'un dispositif de liaison (Q) détachable, de préférence mécanique.

8. Dispositif selon la revendication 5, 6 ou 7, caractérisé par un dispositif de blocage (C), qui coopère avec le dispositif d'asservissement (B, 23) pour fixer et/ou relier rigidement l'organe d'exploration par rapport à la paroi (H) et/ou son appendice saillant (K).

9. Dispositif selon la revendication 5, 6, 7 ou 8, caractérisé en ce qu'au moins le guide d'excentrique (B, 23) de l'organe d'exploration est agencé sous la forme d'une douille d'excentrique (B), qui est insérée dans la paroi (H) - en étant entourée par un roulement à billes (23), qui est excentré de façon correspondante - et supporte l'organe d'exploration (66) en position fixe.

10. Dispositif selon les revendications 8 et 9, caractérisé en ce que le dispositif (C) de blocage de l'organe d'exploration comporte un ou plusieurs corps de blocage, qui sont agencés pour un réglage (M) et de manière à s'appliquer, selon une liaison par formes complémentaires, sur des côtés extérieurs libres, qui sont de préférence diamétralement opposés, de la douille d'excentrique (B).

11. Dispositif selon les revendications 9 ou 10, caractérisé par un dispositif d'entraînement en rotation, qui attaque une ou plusieurs douilles d'excentrique (A, B), et/ou un dispositif d'entraînement linéaire qui attaque l'organe d'exploration (66) monté éventuellement de manière à être déplaçable axialement.

12. Dispositif selon la revendication 11, caractérisé en ce qu'il comporte des dispositifs d'entraînement en rotation associés à la douille d'excentrique (B) de l'organe d'exploration et à la douille d'excentrique (A) de la partie fonctionnelle et du rotor de détection et/ou des dispositifs d'entraînement linéaires, qui sont associés à l'organe d'exploration (66) et à l'ensemble composite partie fonctionnelle et du rotor de détection (D1, D2, D3, D4; 63) et qui sont accouplés entre eux et/ou synchronisés.

13. Procédé pour positionner une partie fonctionnelle (D1, D2, D3, D4) pouvant pivoter et/ou tourner dans un appareil ou dans une machine, transversalement, obliquement et/ou en diagonale par rapport à un axe de rotation (Y) avec le dispositif selon l'une des revendications précédentes, mais au moins selon la revendication 8, caractérisé en ce qu'avant le réglage (R, W) de la partie fonctionnelle (D1, D2, D3, D4), le blocage (C) de l'organe d'exploration par rapport à la paroi (H) est supprimé (M), que l'organe d'exploration (66) est asservi à la piste de réglage (R, W) de l'ensemble rigide du rotor de détection et de la partie fonctionnelle (D1, D2, D3, D3; M) et est ensuite arrêté (M) et/ou est supporté d'une manière rigide et fixe sur la paroi (H).

14. Procédé selon la revendication 13, moyennant l'utilisation du dispositif selon la revendication 7, caractérisé en ce que pendant l'opération d'asservissement de l'organe d'exploration, le guide d'excentrique (B) de l'organe d'exploration et le guide d'excentrique (A) de la partie fonctionnelle et du rotor de détection sont reliés, accouplés et/ou synchronisés (Q) entre eux.

15. Procédé selon la revendication 14, caractérisé en ce qu'avant leur liaison, leur accouplement ou leur synchronisation (Q), les deux douilles d'excentrique (A, B) sont alignées de manière à être congruentes entre elles et/ou de manière à réaliser le suivi de trajets de circulation en recouvrement.
